# EUROPEAN PATENT APPLICATION

(11) **EP 2 653 388 A1**
(43) Date of publication of application: **23.10.2013**
(21) Application number: 12164405.8
(22) Date of filing: 17.04.2012
(51) Int. Cl.: B64F 1/315

(54) **Ladder with vertical elevator for access to aircrafts**

(71) Applicant: Hummel, Ricardo, CEP 95084-220 Caxias do Sul - RS (BR)
(72) Inventor: Hummel, Ricardo, CEP 95084-220 Caxias do Sul - RS (BR)
(74) Representative: Tari Lazaro, Aida

(57) **Abstract**

LADDER WITH VERTICAL ELEVATOR FOR ACCESS TO AIRCRAFTS, comprising a platform (in compliance with NBR 15.655) provided with a vertical elevator having proper size, adapted with special adjustments to ensure accessibility to the aircraft for people with special needs, being this platform (2) attached to a ladder (3) that enables varying the lifting height according to the access height of the aircraft. The ladder has a system that allows varying the height of the steps, so that it becomes leveled with the access to the aircraft, within the height parameters according to which it was designed.

## Description

### TECHNICAL FIELD

The following descriptive report for invention relates to the development of a ladder with vertical elevator for access to aircrafts, comprising a platform provided with a vertical elevator having proper size, adapted with special adjustments to ensure accessibility to the aircraft for people with special needs, being this platform attached to a ladder that enables varying the lifting height according to the access height of the aircraft. The ladder has a system that allows varying the height of the steps, so that it becomes leveled with the access to the aircraft, within the height parameters according to which it was designed.

### STATE OF THE ART

The document U.S. 6,676,359 of GANIERE (2002) describes an elevator and a ramp for luggage, disclosing an elevator for wheelchairs, attached to a ramp for unloading luggage. The accessory is attached to the side of the main stairs of the aircraft.

The document U.S. 5,154,569 of ERYOU et al. (1990) discloses a device for loading a wheelchair into aircrafts, including a towable structure comprising a vertical elevator associated with a ladder. This structure is attachable to the aircraft door.

The Document US 6,109,854 of THOMPSON et al. (1999) discloses a device for raising and lowering baggage from a lifting platform.

The document EP 0.381.497 of DENNIS (1990) disclosed a device for loading wheelchairs to the aircraft, including a structure with elevator and stairs, attached to the aircraft

### DISCUSSION

The proposed ladder with vertical elevator for access to aircrafts operates by combining the motion of a vertical platform having proper size for accessibility, adapted with special adjustments that enable varying the lifting height according to the access height of the aircraft. The ladder has a system that allows varying the height of the steps, so that it becomes leveled with the access to the aircraft, within the height parameters according to which it was designed. In practice, this means that a particular type of ladder with vertical elevator for access to aircrafts will be able to operate with aircrafts having access heights ranging from 2.5 m to 3.5 m, while a second model will be required for operating with aircraft access heights ranging from 3.5 m to 4.5 m, and a third model will be required for aircraft access heights above 4.5 m.

In summary, the advantage of the proposed ladder consists in integrating the access for persons with reduced mobility into the same access for passengers and crew having no special needs to access the aircraft, without affecting the flow or increasing the time for embarkation and disembarkation.

### LIST OF FIGURES

This document for patent of invention is characterized by means of drawings representing the ladder with vertical elevator for access to aircrafts, so that the equipment can be fully reproduced by using the proper technique, enabling full characterization of the pleaded object functionality.

The descriptive part of the report is based on figures prepared to express the best or preferred embodiments of the product currently conceived, by means of a detailed and consecutive numbering, where are clarified the aspects that may be implied by the representation adopted, in order to clearly determine the protection hereby sought.

These figures are merely illustrative, being subject to variations, provided that not diverging from what is originally pleaded.

Therefore, we have:

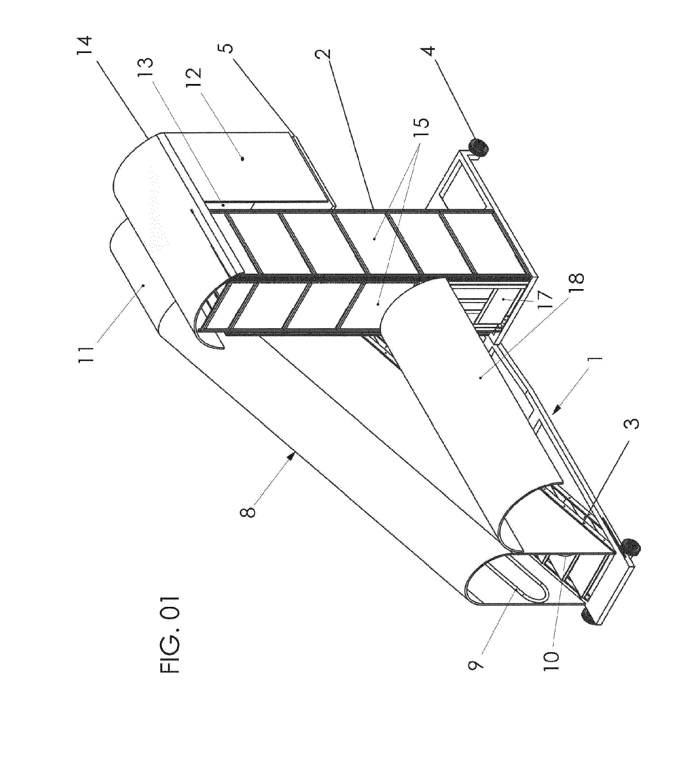

- FIGURE 1 illustrates a perspective representation of the ladder with vertical elevator for access to aircrafts;

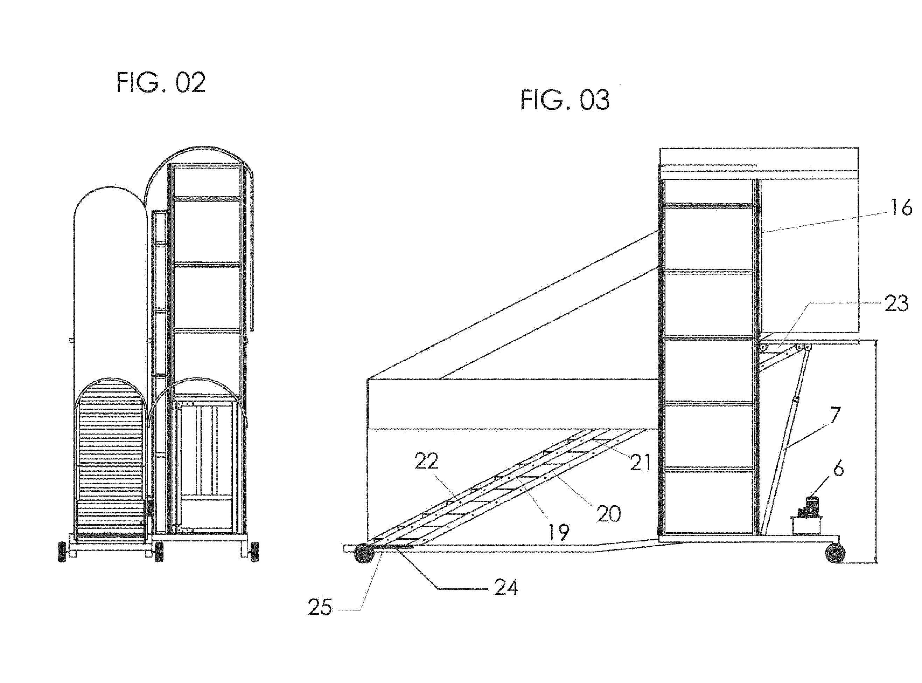

- FIGURE 2 shows an orthogonal side view of the ladder; and
- FIGURE 3 shows a an orthogonal front view.

### DESCRIPTION

A preferred embodiment comprises a supporting structure (1) containing the vertical elevator (2) and the access ladder with variable height (3), being this structure (1) movable by means of rollers (4), allowing its lateral coupling to an aircraft (not shown). The vertical elevator is associated to the ladder (3), sharing the same platform (5) that allows the user to access the stairs or the vertical elevator (2), being equipped with a hydraulic unit (6) used to move the hydraulic piston (7), ensuring autonomy to the set as a whole.

The access ladder with variable height (3) features a cover (8) that closes and protects it against weather, including a handrail connected to the cover on the left side (9) and the right side (10), being that this cover (8) protrudes horizontally (11) over the platform (5) that is attached to the aircraft door (not shown), being this platform the same that gives access to the vertical elevator (2).

The platform (5) has its front closed by a protective plate (12), its side closed by another plate (13), and its top closed by a cover (14), so that the user is contained into a safety module, with exit to the vertical elevator (2) or to the access ladder with variable height (3).

The vertical elevator (2) is protected by a tower with total enclosure (15), comprising the upper opening (16) through which the user having special needs can leave or enter the aircraft, and comprising the lower opening (17) through which the user can leave or enter the elevator (2), being this elevator totally independent from the access ladder (3), so as not to interfere with the upward or downward flow of passengers with special needs.

The exit / entry door (17) of the vertical elevator is positioned in the same direction of the flow through the access ladder (3), being also protected by a cover (18), allowing the passengers with special needs to embark / disembark on / from the aircraft along with other passengers.

The access ladder (3) is composed of two lateral beams, one of them being upper (19) and the other being lower (20), with the rungs (21) fastened by pivots (22) so that, when movement of the piston (7) varies the height of the ladder, the steps are maintained parallel to the ground, thus ensuring that the same ladder can be used with aircrafts of different heights.

The platform (5) that allows the user accessing the aircraft, the stairs and the elevator (2), is integral to the terminal portion of the ladder (23), moving upwards or downwards, following the variation in height of the ladder for coupling on aircrafts with different heights.

The supporting structure (1) of the ladder has two horizontal slots (24), into which are seated two pins (25) from the terminal portion of the ladder (3), so that these pins are able to move along the slots, allowing the horizontal linear displacement of the ladder, for adjusting to the variation in the heights of aircrafts.

## Claims

1. LADDER WITH VERTICAL ELEVATOR FOR ACCESS TO AIRCRAFTS **characterized by** the fact that it comprises a supporting structure (1) that includes the vertical elevator (2) and the access ladder with variable height (3), being this structure (1) movable by means of rollers (4), allowing its lateral coupling to an aircraft (not shown). The vertical elevator is associated to the ladder (3), sharing the same platform (5) that allows the user to access the stairs or the vertical elevator (2), being equipped with a hydraulic unit (6) used to move the hydraulic piston (7), ensuring autonomy to set as a whole.

2. LADDER WITH VERTICAL ELEVATOR FOR ACCESS TO AIRCRAFTS, according to claim 1, and **characterized by** the fact that the access ladder with variable height (3) features a cover (8) that closes and protects it against weather, including a handrail connected to the cover on the left side (9) and the right side (10), being that this cover (8) protrudes horizontally (11) over the platform (5) that is attached to the aircraft door (not shown), being this platform the same that gives access to the vertical elevator (2).

3. LADDER WITH VERTICAL ELEVATOR FOR ACCESS TO AIRCRAFTS, according to claim 1, and **characterized by** the fact that the platform (5) has its front closed by a protective plate (12), its side closed by another plate (13), and its top closed by a cover (14), so that the user is contained into a safety module, with exit to the vertical elevator (2) or to the access ladder with variable height (3).

4. LADDER WITH VERTICAL ELEVATOR FOR ACCESS TO AIRCRAFTS, according to claim 1, and **characterized by** the fact that the vertical elevator (2) is protected by a tower with total enclosure (15), comprising the upper opening (16) through which the user having special needs can leave or enter the aircraft, and comprising the lower opening (17) through which the user can leave or enter the elevator (2), being this elevator totally independent from the access ladder (3), so as not to interfere with the upward or downward flow of passengers with special needs.

5. LADDER WITH VERTICAL ELEVATOR FOR ACCESS TO AIRCRAFTS, according to claim 4, and **characterized by** the fact that the exit / entry door (17) of the vertical elevator is positioned in the same direction of the flow through the access ladder (3), being also protected by a cover (18), allowing the passengers with special needs to embark / disembark on / from the aircraft along with other passengers.

6. LADDER WITH VERTICAL ELEVATOR FOR ACCESS TO AIRCRAFTS, according to claim 1, and **characterized by** the fact that the access ladder (3) is composed of two lateral beams, one of them being upper (19) and the other being lower (20), with the rungs (21) fastened by pivots (22) so that, when movement of the piston (7) varies the height of the ladder, the steps are maintained parallel to the ground, thus ensuring that the same ladder can be used with aircrafts of different heights.

7. LADDER WITH VERTICAL ELEVATOR FOR ACCESS TO AIRCRAFTS, according to claim 1, and **characterized by** the fact that the platform (5) that allows the user accessing the aircraft, the stairs and the elevator (2), is integral to the terminal portion of the ladder (23), moving upwards or downwards, following the variation in height of the ladder for coupling on aircrafts with different heights.

8. LADDER WITH VERTICAL ELEVATOR FOR ACCESS TO AIRCRAFTS, according to claim 6, and **characterized by** the fact that the supporting structure (1) of the ladder has two horizontal slots (24), into which are seated two pins (25) from the terminal portion of the ladder (3), so that these pins are able to move along the slots, allowing the horizontal linear displacement of the ladder, for adjusting to the variation in the heights of aircrafts.
